# EUROPEAN PATENT APPLICATION

(11) **EP 0 863 320 A1**
(43) Date of publication of application: **09.09.1998**
(21) Application number: 98103634.6
(22) Date of filing: 02.03.1998
(51) Int. Cl.: F16C 1/22

(54) **Axial adjustment device for a trailing cable transmission**

(30) Priority: 04.03.1997 IT TO970177
(71) Applicant: ROLTRA MORSE S.p.A., 86077 Pozzilli (IT)
(72) Inventor: Granero, Giancarlo, 18020 Laigueglia (IT)
(74) Representative: Franzolin, Luigi

(57) **Abstract**

Axial adjustment device (1) for a member (3) of a trailing cable transmission (2), provided with a fastening element (7) having first and second seats (8, 23) intersecting orthogonally with one another and adapted to be slidably engaged respectively by one end (10, 15) of the said member (3) and by a fixing element (24), the end (10, 15) being provided externally with first radial projections (16) disposed at an even pitch (P) and defining between them a plurality of grooves (17), while the fixing element (24) is provided with a plurality of second projections (30) disposed at the said pitch (P) and adapted to be coupled with the grooves (17) of the end (10, 15) and is movable between a normal position and a position for blocking the end (10, 15) in a desired axial position by coupling the second projections (30) with the said grooves (17), the fastening element (7) moreover being provided with a pair of third flexible projections (45) projecting radially towards the interior of the first seat (8), disposed at a distance from the second projections (30) by respective multiple quantities of the said pitch (P) and adapted to engage any one of the grooves (17) of the end (10, 15) during use in order to ensure precise discrete positioning of the said end (10, 15) with respect to the fixing element (24) and to allow for secure coupling of the second projections (30) with the grooves (17).

## Description

This invention relates to an axial adjustment device for a trailing cable transmission adapted to connect two remote elements together and comprising a pair of coaxial members mounted to slide one within the other, e.g. a sheath and a cable.

As is known, transmissions of the abovementioned type must be controlled during the assembly phase thereof so that the remote elements connected by the said transmission are not subjected to undesired stresses or do not cause backlash. To this end, correct relative axial positioning of the cable and the sheath must be ensured and this can be achieved by fixing one end of one of these members to a supporting element by means of an adjustment device of the abovementioned type.

Devices of this kind normally comprise a fastening element having first and second seats intersecting orthogonally with one another and slidably engaged respectively by the end of the said member and by a spring fixing element.

The end of the member to be fixed is advantageously provided with a plurality of first radial projections disposed at an even pitch and defining between them a plurality of grooves, while the fixing element is provided towards the said end with a working surface provided with a plurality of second projections complementary to the said grooves and adapted to cooperate therewith.

The fixing element is advantageously movable between two positions in which it is coupled to the second seat of the fastening element by a snap fit. In a first of these position, or the normal position, the working surface is disposed at a distance from the end of the member to be fixed, which can therefore be moved into the first seat until it reaches the desired axial position with respect to the fastening element, while, in the other position, or the blocking position, the second projections are coupled with the grooves of the said member and hold the latter in the axial position previously selected.

The devices described have the following disadvantage.

The member to be fixed can assume an undesirable axial position with respect to the fixing element in the mounting seat, such that the first projections face the second projections and prevent the said fixing element from snapping into the blocking position. This therefore means that the end of the member to be fixed has to be manipulated in order to displace it into a position so as to allow the fixing element to reach the blocking position, with inevitable losses of time.

The aim of this invention is to produce an axial adjustment device for a trailing cable transmission which does not have the known disadvantage of the known devices described hereinabove.

The aforesaid problem is solved by this invention in that it relates to an axial adjustment device for a trailing cable transmission comprising first and second coaxial members mounted to slide one within the other, the said device comprising
- a fastening element having a first seat adapted to be engaged in an axially slidable manner by one end of one of the said members provided externally with a plurality of first radial projections disposed at an even pitch and defining between them a plurality of first grooves, and a second seat intersecting with the said first seat and having a radial axis with respect to the said member, and
- a fixing element slidably mounted in the said second seat of the said fastening element, comprising at least one working surface provided with a plurality of second projections disposed at the said pitch and adapted to be coupled with the said grooves of the said member and movable with respect to the said fastening element between a normal position in which the said working surface is disposed at a distance from the said end of the said member and a blocking position in which the said second projections are coupled with the said relative grooves of the said member and hold the said member in a desired axial position with respect to the said fastening element,
   characterised in that the said fastening element comprises at least a third flexible projection projecting radially towards the interior of the said first seat, disposed at a distance from the said second projections by a respective multiple quantity of the said pitch and adapted to engage any one of the said grooves of the said member during use in order to ensure precise discrete positioning of the end of the said member with respect to the said fixing element and to allow for secure coupling of the said second projections with the said relative grooves.

This invention will be more readily understood from the following description of a preferred embodiment given purely by way of a non-limiting example and with reference to the accompanying drawings, in which:
Figure 1 is a longitudinal section of an axial adjustment device for a trailing cable transmission according to this invention;
Figure 2 is a detail from Figure 1 on a larger scale;
Figure 3 is an axial section of the device of Figure 1 in a different operating position;
Figure 4 is a section along the line IV-IV of Figure 1, on a larger scale and partly broken away for the sake of clarity, in which the left-hand part shows the adjustment device in the operating position of Figure 3;
Figure 5 is a detail from Figure 4 on a larger scale, and
Figure 6 is a rear view of a detail from Figure 1 on a larger scale.

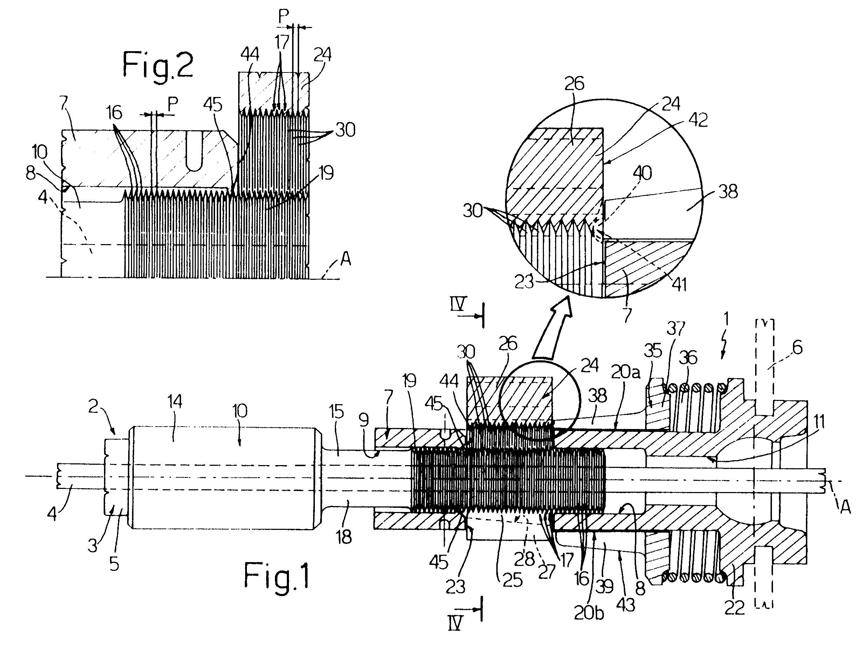

Referring to Figures 1 to 3, the reference numeral 1 designates in its entirety an axial adjustment device for a trailing cable transmission 2, e.g. of the type generally known as a "Bowden" cable.

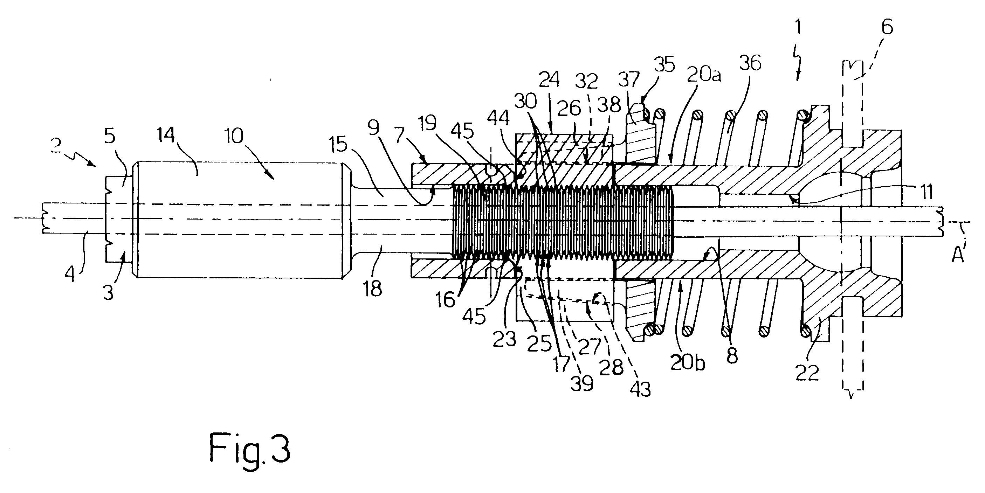

It should be noted that the expressions "upper", "lower", "front", "rear" and the like as used in this description do not have a limiting function, but are used exclusively for the sake of greater clarity of the description with reference to the position of the device 1 shown in Figures 1 and 3.

The transmission 2 comprises an outer sheath 3 having a longitudinal axis A and a metal cable 4 coaxial with the sheath 3, slidably mounted within the said sheath 3 and connecting two remote elements (not shown) together.

The function of the device 1 is to allow for precise and reliable relative axial positioning of the cable 4 and the sheath 3. In the embodiment shown, this is achieved by fixing an end portion 5 of the sheath 3 to a supporting element 6 (only shown in diagrammatic form) in a desired position along the axis A by means of the device 1.

The device 1 comprises a fastening element 7 with an axis A adapted to be fixed to the supporting element 6 and having an axial through hole 8 which has a front section 9 adapted to house a cylindrical sleeve 10 integrally connected in a known manner to the portion 5 of the sheath 3 and defining one end of the said sheath 3, and a rear section 11 engaged during use by the cable 4 disposed so that it traverses the sheath 3 and the said sleeve 10.

In particular, the sleeve 10 comprises a first portion 14 disposed externally with respect to the fastening element 7 and engaged by the portion 5 of the sheath 3, and a second portion 15 engaging the section 9 of the hole 8 in an axially slidable manner, having an outer diameter smaller than the outer diameter of the portion 14 and provided on its outer surface with a plurality of radial teeth 16 disposed at an even pitch P and defining between them a plurality of grooves 17. More precisely, the portion 15 comprises a first smooth section 18 for connection to the portion 14 and a second section 19 provided with the teeth 16.

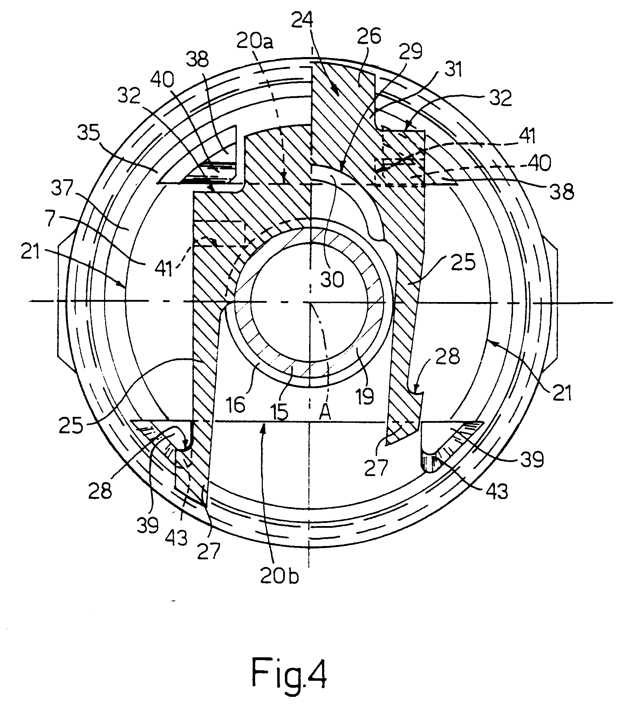

Referring particularly to Figures 1, 3 and 4, the fastening element 7 is delimited at the top and bottom by a pair of flat surfaces 20a, 20b parallel to the axis A and at the sides by a pair of curved surfaces 21 with an axis A convex towards the exterior. The fastening element 7 is moreover provided externally with a rear annular flange 22 opposite the sleeve 10 and has a box-shaped radial through seat 23 intersecting with the hole 8 and having dimensions along the axis A smaller than the axial length of the section 19 of the sleeve 10.

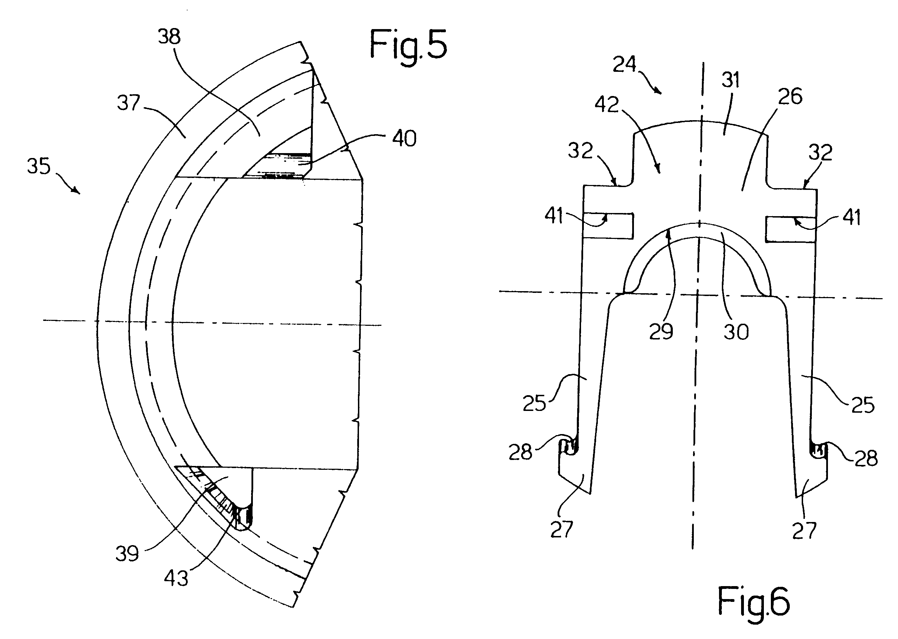

Referring to Figures 1, 2, 3, 4 and 6, the device 1 moreover comprises a fixing element 24 mounted to move in the seat 23 of the fastening element 7 and adapted to cooperate with the portion 15 of the sleeve 10 in order to block the latter and thus the sheath 3 in the desired axial position with respect to the said fastening element 7.

In particular, the fixing element 24 is formed by a substantially C-shaped spring and comprises a pair of substantially flat arms 25 extending radially with respect to the axis A and disposed on diametrically opposing sides of the portion 15 of the sleeve 10 during use, and a connecting portion 26 for the said arms 25.

More precisely, each arm 25 is provided at the bottom in correspondence with a free end thereof with a longitudinal edge 27 folded towards the exterior in the opposite direction to the other arm 25, having a cross section decreasing towards the flange 22 of the fastening element 7 and being provided at the top towards the portion 26 with a flat cam surface 28 inclined with respect to the axis A, the function of which will be explained hereinafter.

The portion 26 is provided towards the portion 15 of the sleeve 10 with a substantially semi-cylindrical curved working surface 29 with an axis A provided with a plurality of radial teeth 30 disposed at the said pitch P and adapted to be coupled with relative grooves 17 of the portion 15 of the sleeve 10 to fix the latter in the desired axial position. The portion 26 is moreover provided on the opposite side of the arms 25 with a central protuberance 31 extending substantially parallel to the axis A along the entire length of the said portion 26, defining a handle for the manual movement of the fixing element 24 and connected laterally to opposite flat longitudinal surfaces 32 parallel to the axis A.

The fixing element 24 is movable with respect to the fastening element 7 between a normal position (Figure 1) in which its surface 29 is disposed at a distance from the portion 15 of the sleeve 10 and a blocking position (Figure 3) in which its teeth 30 are coupled with relative grooves 17 of the portion 15 of the sleeve 10 and hold the said sleeve 10 and thus the sheath 3 in the desired axial position with respect to the fastening element 7.

Referring to Figures 1, 3, 4 and 5, the device 1 moreover comprises a thrust element 35 with an axis A mounted to move axially on the fastening element 7 between the flange 22 and the fixing element 24, and a cylindrical helical spring 36 with an axis A interposed between the thrust element 35 and the flange 22 of the fastening element 7 in order to load the said thrust element 35 towards the fixing element 24.

In particular, the thrust element 35 comprises an annular portion 37 mounted to slide on the fastening element 7 and two pairs of upper and lower lances 38, 39 respectively projecting from the portion 37 towards the fixing element 24 parallel to the axis A, having cross sections decreasing towards the fixing element 24 and each pair disposed to slide along a relative surface 20a, 20b of the fastening element 7.

The lances 38 are moreover provided in correspondence with free ends thereof with respective rounded extensions 40 adapted to releasably engage relative lateral notches 41 formed in a rear surface 42 of the fixing element 24 in correspondence with the said portion 26 and adapted to cooperate with the said notches 41 as a result of the action of the spring 36 in order to hold the fixing element 24 in the normal position (Figure 1).

The lances 39 are provided on the opposite side of the fastening element 7 with respective flat cam surfaces 43 inclined with respect to the axis A, adapted to be slidably coupled to the surfaces 28 of the edges 27 of the respective arms 25 once the extensions 40 of the lances 38 have been disengaged from the respective notches 41 and are adapted to cooperate with the said surfaces 28 as a result of the action of the spring 36 in order to transmit a radial load to the fixing element 24 so as to bring the said fixing element 24 into the blocking position and to ensure that the teeth 30 and the relative grooves 17 of the sleeve 10 are coupled together (Figure 3). In the embodiment shown, the extensions 40 are disengaged from the respective notches 41 by means of manual displacement in the radial direction of the fixing element 24 so as to allow the lances 38 to slide parallel to the axis A to the exterior of the said fixing element 24 and, more precisely, along the respective surfaces 32 and on opposite lateral sides of the protuberance 31.

In its blocking position, the fixing element 24 is therefore subjected contemporaneously to an axial load which holds it against a boundary surface 44 of the seat 23 extending radially with respect to the axis A and directed towards the thrust element 35, and a radial load as a result of the inclination of the surfaces 28 and 43 coupled together and adapted to hold the teeth 30 in engagement with the grooves 17. As a result of the action of the abovementioned loads, the coupling of the thrust element 35 and the fixing element 24 is therefore of the irreversible type, i.e. so as to prevent any displacement of the fixing element 24 tending to return it to the normal position and consequently to cause separation of the teeth 30 and the relative grooves 17.

Referring particularly to Figures 1, 2 and 3, the fastening element 7 moreover comprises a pair of flexible projections 45 projecting radially towards the interior of the hole 8 facing one another and having a substantially triangular outer profile. These projections 45 are disposed at a distance along the axis A from the teeth 30 of the fixing element 24 by respective multiple quantities of the said pitch P and are adapted to engage any of the grooves 17 of the portion 15 of the sleeve 10 during use in order to ensure precise discrete positioning of the said portion 15 with respect to the fixing element 24 and to allow for secure coupling of the teeth 30 and the relative grooves 17.

The operation of the device 1 will be described departing from an initial configuration in which the portion 15 of the sleeve 10 is not inserted into the hole 8 of the fastening element 7 and the fixing element 24 is held in its normal position by the thrust element 35 loaded by the spring 36. In particular, the extensions 40 of the lances 38 of the thrust element 35 are engaged in the relative notches 41 of the fixing element 24 and are held in engagement with the said notches 41 by virtue of the action of the spring 36 (Figure 1).

The introduction of the portion 15 of the sleeve into the hole 8 causes slight flexion of the projections 45 which then exert pressure on the contiguous teeth 16 so as to bring them immediately up or down along the axis A with respect to the said projections 45. In this manner, at the end of the positioning of the portion 15 of the sleeve 10 inside the hole 8, the projections 45 are disposed so that they are securely engaged with one of the grooves 17 and therefore guarantee that the grooves 17 disposed between the axial limits of the seat 23 are perfectly aligned with the relative teeth 30 of the fixing element 24.

At this point, if the fixing element 24 is displaced manually in a radial direction with respect to the axis A, the extensions 40 are disengaged from the relative notches 41 and, as soon as the lances 38 go beyond the respective surfaces 32, the thrust element 35 is displaced by the spring 36 towards the fixing element 24, thereby coupling the surfaces 43 of the lances 39 to the surfaces 28 of the edges 27 of the relative arms 25 and bringing the fixing element 24 into its blocking position (Figure 3). The axial action of the spring 36 brings the fixing element 24 to bear axially against the surface 44 of the seat 23, while the cooperation between the surfaces 28 and 43 causes radial displacement of the said fixing element 24 so as to couple the teeth 30 with the grooves 17 of the portion 15 of the sleeve 10 and to block the latter in an irreversible manner in the axial position in which it is situated.

In order to release the portion 15 of the sleeve 10 from the device 1, the thrust element 35 simply has to be displaced manually along the axis A towards the flange 22 and the fixing element 24 then returned to the normal position.

An examination of the features of the device according to this invention will show the advantages that can be obtained.

In particular, as will be clear from the description, the flexible projections 45 exert pressure on the contiguous teeth 16 in the mounting seat so as to bring them immediately up or down along the axis A with respect to the said projections 45. This prevents the sleeve 10 from assuming undesirable positions and ensures coupling of the teeth 30 and the grooves 17, without the said sleeve 10 having to be manipulated and without any loss of time.

It will finally be clear that modifications and changes can be made to the device 1 described and illustrated without thereby going beyond the scope of the claims.

In particular, it will be clear that the device 1 can be used both to fix the axial position of the sheath 3 with respect to the cable 4, as described hereinbefore, and to fix the axial position of the cable 4 with respect to the sheath 3.

The portion 15 of the sleeve 10 and the surface 29 of the fixing element 24 could moreover be provided, instead of with the teeth 16 and 30, with respective projections of any type and shape, provided that they have a said even pitch and are adapted to be coupled together.

## Claims

1. Axial adjustment device (1) for a trailing cable transmission (2) comprising first and second coaxial members (3, 4) mounted to slide one within the other, the said device (1) comprising:
- a fastening element (7) having a first seat (8) adapted to be engaged in an axially slidable manner by one end (10, 15) of one (3) of the said members (3, 4) provided externally with a plurality of first radial projections (16) disposed at an even pitch (P) and defining between them a plurality of first grooves (17), and a second seat (23) intersecting with the said first seat (8) and having a radial axis with respect to the said member (3), and
- a fixing element (24) slidably mounted in the said second seat (23) of the said fastening element (7), comprising at least one working surface (29) provided with a plurality of second projections (30) disposed at the said pitch (P) and adapted to be coupled with the said grooves (17) of the said member (3) and movable with respect to the said fastening element (7) between a normal position in which the said working surface (29) is disposed at a distance from the said end (10, 15) of the said member (3) and a blocking position in which the said second projections (30) are coupled with the said relative grooves (17) of the said member (3) and hold the said member (3) in a desired axial position with respect to the said fastening element (7),
characterised in that the said fastening element (7) comprises at least a third flexible projection (45) projecting radially towards the interior of the said first seat (8), disposed at a distance from the said second projections (30) by a respective multiple quantity of the said pitch (P) and adapted to engage any one of the said grooves (17) of the said member (3) during use in order to ensure precise discrete positioning of the end (10, 15) of the said member (3) with respect to the said fixing element (24) and to allow for secure coupling of the said second projections (30) with the said relative grooves (17).

2. Device according to claim 1, characterised in that the said fastening element (7) comprises two said third projections (45) cooperating on opposite sides with the end (10, 15) of the said member (3).

3. Device according to claim 1 or claim 2, characterised in that it comprises a thrust element (35) movable axially along the said fastening element (7) and elastic means (36) interposed between the said thrust element (35) and the said fastening element (7) in order to load the said thrust element (35) towards the said fixing element (24), the said thrust element (35) and the said fixing element (24) comprising first releasable relative constraining means (38, 40, 41) cooperating with one another as a result of the action of the said elastic means (36) in order to hold the said fixing element (24) in the said normal position, the said thrust element (35) and the said fixing element (24) comprising second relative cam constraining means (39, 43, 27, 28) which can be activated following deactivation of the said first relative constraining means (38, 40, 41) and cooperating with one another as a result of the action of the said elastic means (36) in order to transmit a radial load to the said fixing element (24), adapted to bring the said fixing element (24) into the said blocking position.

4. Device according to claim 3, characterised in that, in both the said normal position and the said blocking position, the said fixing element (24) is held by the said thrust element (35) and by the said elastic means (36) so that it bears axially against a lateral boundary surface (44) of the said first seat (8) extending radially with respect to the said member (3) and directed towards the said thrust element (35).

5. Device according to any one of the preceding claims, characterised in that the said fixing element (24) is formed by a substantially C-shaped spring and comprises a pair of arms (25) extending radially with respect to the end (10, 15) of the said member (3) and disposed on diametrically opposing sides of the said end (10, 15) during use, and a connecting portion (26) for the said arms (25) delimited towards the said member (3) by the said working surface (29).

6. Device according to any one of the preceding claims, characterised in that the said members (3, 4) comprise a sheath (3) and a cable (4) mounted to slide within the said sheath (3).
